# EUROPEAN PATENT SPECIFICATION

(11) **EP 0 884 352 B1**
(45) Date of publication and mention of the grant of the patent: **05.09.2001**
(21) Application number: 98110639.6
(22) Date of filing: 10.06.1998
(51) Int. Cl.: C08K 5/13, C08L 29/04, C08F 8/12

(54) **Water-soluble film**
Wasserlöslicher Folie
Feuille hydrosoluble

(30) Priority: 11.06.1997 JP 15322797; 03.12.1997 JP 33270697
(43) Date of publication of application: 16.12.1998
(73) Proprietor: KURARAY CO., LTD., Kurashiki-City Okayama Prefecture 710 (JP)
(72) Inventor: Miyazaki, Hirotoshi, Kurashiki-city, Okayama (JP)
(74) Representative: VOSSIUS & PARTNER

(56) References cited:
- EP-A- 0 259 037
- US-A- 4 156 047
- PATENT ABSTRACTS OF JAPAN vol. 095, no. 008, 29 September 1995 & JP 07 118407 A (KURARAY CO LTD), 9 May 1995
- PATENT ABSTRACTS OF JAPAN vol. 098, no. 004, 31 March 1998 & JP 09 316270 A (KURARAY CO LTD), 9 December 1997

## Description

The present invention relates to a polyvinyl alcohol (hereinafter referred to as PVA) film having excellent properties suitable for packaging chemicals such as agricultural chemicals and microbicides.

Recently a method of unit-dose packaging (unit pack) of various chemicals such as agricultural chemicals being airtight-packaged with a water-soluble film has been used widely, where the chemicals in packaged form
are thrown into water so that the contents are dissolved or dispersed in water. The unit pack is advantageous in that users do not directly touch harmful chemicals, that measurement of chemicals for use is unnecessary as the unit-dose is already packaged, and that the disposal of the containers and bags used for packaging chemicals is unnecessary or easy.

Partially-hydrolyzed PVA films have heretofore been used as water-soluble films for unit packs. The conventional water-soluble films are excellent in cold water-solubility and mechanical strength. However, some kinds of chemicals to be packaged therein cause problems that the water-solubility of the films is lowered with the passage of time during storage, and finally that they become water-insoluble or hardly soluble in water.

Chemicals which make partially-hydrolyzed PVA films water-insoluble are, for example, alkaline chemical substances, acid chemical substances, chlorine-containing chemical substances, chemical compounds with a salt of a polyvalent metal such as copper or cobalt, polycarboxylic acid-containing chemical substances, polyamine-containing chemical substances, boric acid-containing chemical substances, agricultural chemicals such as insecticides or herbicides, and microbicides.

As films for packaging alkaline chemical substances, there have been known films of PVA modified with salts of carboxylic acids. It has been reported that sorbitol-containing PVA films are resistant to boric acid.

As films for packaging acid chemical substances, chlorine-containing chemical substances (e.g. microbicides) and agricultural chemicals, there have been known polyethylene oxide films and cellulose films. However these films are defective in that the rate of water-solubility is extremely low, that mechanical properties are poor, and that impact resistance at low temperatures is extremely low because they are hard and brittle.

As films for packaging agricultural chemicals and microbicides, there have been known water-soluble films that are prepared from PVA or carboxylate-modified PVA with addition therein of an auxiliary such as polyethylene glycol or propyl gallate; JP-A-53-24351 (1978).

Also there have been known water-soluble films for packaging agricultural chemicals, which are prepared from sodium 2-acrylamido-2-methylpropanesulfonate-modified PVA with addition therein of a phenol derivative such as bisphenol A; see JP-A-7-118407 (1995) . However, in the case where chemicals such as acid chemical substances, chlorine-containing chemical substances, agricultural chemicals and microbicides are packaged with the conventional PVA films and stored for a long period, the PVA films lose their function as water-soluble film because they are discolored to be brown and become insoluble in cold water and hot water.

The object of the present invention is to provide a water-soluble film which has excellent mechanical strength, which has softness and toughness, and moreover which can keep its original water-solubility in the case where chemicals such as agricultural chemicals and microbicides are packaged thereby and stored for a long period.

Another object of the present invention is to provide a package of acid chemical substances, chlorine-containing chemical substances or agricultural chemicals being packaged with the water-soluble film.

Furthermore the object of the present invention is to provide a composition favorably used as a material for producing the water-soluble film.

The above-mentioned problems could surprisingly be solved by providing as a first subject matter of the invention a water-soluble film comprising 100 parts by weight of (A) a modified polyvinyl alcohol having a sulfonic acid group and 0.05 to 20 parts by weight of (B) gallic acid or a C₁₋₅ alkyl ester thereof.
A further subject matter of the invention is a package of acid chemical substances, chlorine-containing chemical substances or agricultural chemicals being packaged with the said water-soluble film.
Still a further subject matter of the invention is a composition comprising 100 parts by weight of (A) a modified polyvinyl alcohol having a sulfonic acid group and 0.05 to 20 parts by weight of (B) gallic acid or a C₁₋₅ alkyl ester thereof.

The present invention is explained in detail hereinafter.

The modified PVA (A) having a sulfonic acid group used in the present invention is, for example, a hydrolyzate of a copolymer of a vinyl ester and a sulfonic acid group-containing monomer, or a polymer which is prepared by addition reaction of a sulfonic acid group-containing compound to PVA (hydrolysate of polyvinyl ester).

The hydrolyzate of a copolymer of a vinyl ester and a sulfonic acid group-containg monomer is obtained by copolymerizing, in the presence of a radical initiator, a vinyl ester and a sulfonic acid group-containing monomer in bulk or in a solvent such as alcohol, followed by partially or highly hydrolyzing the copolymer with an alkali or acid catalyst.

The vinyl ester is, for example, vinyl acetate, vinyl propionate, vinyl formate, vinyl versatate or vinyl pivalate.

Of these, vinyl acetate is generally used, as it is produced on an industrial scale and favorable in respect of cost.

Any sulfonic acid group-containing monomer can be used as far as it has a sulfonic acid group or a salt thereof in the molecule and is copolymerizable with a vinyl ester. Examples are 2-acrylamido-2-methylpropanesulfonic acid, 2-acrylamido-1-methylpropanesulfonic acid, 2-methacrylamido-2-methylpropanesulfonic acid, and alkali metal salts thereof; olefin sulfonic acids such as ethylenesulfonic acid, allylsulfonic acid, methallylsulfonic acid, and alkali metal salts thereof. Of these, most preferable are 2-acrylamido-2-methylpropanesulfonic acid and alkali metal salt thereof because of their copolymerizability with a vinyl ester and the stability during hydrolysis. The alkali metals are, for example, Na, K and Li. Furthermore their analogues are, for example, ammonia and amines. The sulfonic acid group in acid form can be used in the present invention, but it is preferable that the group is partially or completely neutralized with an alkali metal in order to prevent the vinyl ester from being hydrolyzed during copolymerization.

The copolymer of the vinyl ester and the sulfonic acid group-containing monomer is then hydrolyzed with an alkali or acid catalyst in an alcohol solution to give the modified PVA having a sulfonic acid group used in the present invention.

The polymer which is prepared by addition reaction of a sulfonic acid group-containing compound to PVA (hydrolysate of polyvinyl ester) is a polymer into which is introduced a sulfonic acid group-containing compound into PVA through acetalization or Michael addition reaction.

The sulfonic acid group-containing compound to be used in the acetalization is an aldehyde compound having a sulfonic acid group such as a salt of butylaldehydosulfonic acid and a salt of benzaldehydosulfonic acid.

The sulfonic acid group-containing compound to be used in the Michael addition reaction is an unsaturated sulfonic acid group-containing compound such as 2-acrylamido-2-methylpropanesulfonic acid, allylsulfonic acid, and alkali metal salts thereof.

Other than the above methods, there can be also used a method of adding a sulfonic acid group-containing alcohol compound to PVA through an esterification reaction, and a method of introducing a sulfonic acid group-containing halide compound into PVA through a condensation reaction.

The content of sulfonic acid group units in the modified PVA (A) is preferably 0.1 to 20 mol%, more preferably 0.5 to 10 mol%, most preferably 1 to 5 mol%. The mechanical properties as water-soluble film are also important, and strength and flexibility of the film are necessary even in the case of a thin thickness of 10 to 100 µm. Therefore, the viscosity-averaged degree of polymerization (hereinafter referred to as degree of polymerization) of the modified PVA (A) is preferably 300 to 10000, more preferably 500 to 8000. In the case where the degree of polymerization is less than 300, the film strength is becoming smaller. In the case where the degree of polymerization is more than 10000, the viscosity of the solution during preparation of the film is so high that the workability is lowered.

Since the film has to be water-soluble and resistant to chemicals, the degree of hydrolysis of the modified PVA (A) is 50 to 100 mol%, preferably 80 to 100 mol%, also in view of the strength and toughness of the film and the workability thereof into bags.

The gallic acid or a C₁₋₅ alkyl ester thereof (B) used in the present invention is a compound which has a function to prevent the water-soluble film from becoming water-insoluble. Examples are gallic acid, its salts, and its esters such as methyl, ethyl, propyl and isoamyl esters. of these, most preferable are gallic acid and propyl gallate (propyl ester of gallic acid). The amount of the component (B) is 0.05 to 20 parts by weight, preferably 0.2 to 10 parts by weight, more preferably 0.5 to 3 parts by weight, based on 100 parts by weight of the component (A). In the case where the amount of the component (B) is less than 0.05 parts by weight, the water-solubility of the film is lowered and the film becomes water-insoluble when chemicals are packaged with the film and stored. On the other hand, in the case where the amount of the component (B) is more than 20 parts by weight, the film strength is much lowered and, in addition, white powder migrates on the surface of the film.

In addition to the component (A) and the component (B), loading the water-soluble film of the present invention with a reducing hydroxycarboxylic acid (C) can improve the stability during storage and furthermore prevent discoloration due to polyvalent metal ions such as iron ions.

The reducing hydroxycarboxylic acid (C) is, for example, citric acid, tartaric acid, L-ascorbic acid, malic acid, racemic acid, and salts thereof. Of these, preferable are citric acid, tartaric acid and L-ascorbic acid, and particularly preferable is citric acid. The amount of the component (C) is preferably 0.01 to 10 parts by weight, more preferably 0.05 to 5 parts by weight, most preferably 0.1 to 3 parts by weight, based on 100 parts by weight of PVA (A).

Since the water-soluble film of the present invention is transported, stored and used even in high-temperature and high-humidity districts and cold-temperature districts,
strength and toughness of the film are necessary. In particular, the film should have good impact resistance at low temperature, and therefore various plasticizers can be added for the purpose of lowering the glass transition temperature of the film. As plasticizers, any plasticizer usable for PVA can be used. Examples are polyalcohol such as glycerin, diglycerin and diethylene glycol;
polyether such as polyethylene glycol and polypropylene glycol; phenol derivative such as bisphenol A, and bisphenol S; amide compounds such as N-methylpyrrolidone ; adducts of polyalcohols such as glycerin, pentaerythritol and sorbitol with ethylene oxide; and water. These plasticizers can be used alone or combined.

Methods of producing the film are, for example, a method of adding the component (B) and optionally the component (C) to an aqueous solution of the modified PVA (A), dissolving or dispersing them, and thereafter casting them to form a film; or a method of melt-extruding them in the presence of a suitable plasticizer or water to form a film. If desired, ordinary additives such as a colorant, fragrance, vehicle, defoaming agent, mold-releasing agent, ultraviolet absorbent, inorganic powder, surfactant, preservative and antifungal agent may be added. Further if desired, water-soluble polymers such as PVA other than the component (A), starch, carboxymethyl cellulose, methyl cellulose or hydroxymethyl cellulose may also be added thereto within the range not impairing the characteristics of the present invention.

As the chemicals to be packaged with the water-soluble film of the present invention, preferable are acid chemical substances, chlorine-containing chemical substances, agricultural chemicals and microbicides. Other chemicals such as detergents, dyes, or chemical substances for plantation and cultivation also can be packaged.

The acid chemical substances are those which exhibit an acid reaction when dissolved or dispersed in water. Examples are agricultural chemicals, microbicides and deodorizers.

The chlorine-containing chemical substances are those which contain chlorine in the molecule. Examples are agricultural chemicals, microbicides and bleaches. As specific examples, there are isocyanuric acid trichloride, isocyanuric acid dichloride, sodium salt of isocyanuric acid dichloride, N,N-dichlorohydantoin and N-chloro-N-bromo-5,5-dimethylhydantoin.

As the agricultural chemicals, examples are chloropicrin, 1,3-dichloropropene and dichloroisopropyl ether.

The chemicals may be in any form of granule, tablet, powder or even liquid. They may contain carriers such as talc, kaolin, bentonite and diatomaceous earth; extenders; surfactants and dispersants for improving the affinity of the chemicals for water and for uniformly dispersing the chemicals in water.

The water-soluble film of the present invention gives an excellent result so that the water-solubility is not lowered with the passage of time, even when used for packaging acid chemical substances, chlorine-containing chemical substances or agricultural chemicals.

The present invention also provides a composition comprising 100 parts by weight of the component (A) and 0.05 to 20 parts by weight of the component (B). It further provides a composition comprising 100 parts by weight of the component (A), 0.05 to 20 parts by weight of the component (B), and 0.01 to 10 parts by weight of the component (C). These compositions are favorably used not only as a material for producing the above-mentioned water-soluble film, but also as a material for producing fibers which are used e.g. for non-woven fabrics.

### Examples

The present invention is described in more detail hereinafter with the Examples. Unless otherwise specifically indicated, "%" and "part(s)" in Examples are on weight-basis.

### Example 1:

A methanol solution of sodium hydroxide was added to a methanol solution of a copolymer which had been prepared by copolymerizing, in methanol, vinyl acetate and sodium acrylamido-2-methylpropanesulfonate, thereby hydrolyzing the copolymer to give a modified PVA having a sulfonic acid group. The modified PVA thus obtained had a degree of polymerization of 1700, a degree of hydrolysis of 88 mol%, and a sulfonic acid group content of 2 mol%.

To 100 parts of the modified PVA, there were added 1 part of propyl gallate, 0.2 parts of citric acid, and 20 parts of glycerin as plasticizer to prepare a uniform aqueous solution. The solution was cast onto a hot roll at 70°C to obtain a modified PVA film having a thickness of 40 µm.

This modified PVA film was formed into bags (10 cm x 15 cm). 35 g of tablets of a microbicide for swimming pools, which contained trichloroisocyanuric acid as main component, was put into each bag, and hot-sealed. Thus were obtained packages (single-wrapped packages) having the chemicals therein. The outside of the above-obtained packages was furthermore wrapped with a film which was obtained by laminating the surface of aluminium with polyethylene (hereinafter referred to as aluminium-laminated film), and hot-sealed to give double-wrapped packages.

The double-wrapped packages having the chemical therein were subjected to an accelerated test (shelf test) for long-term storage stability, in which the packages were left in a thermostatic chamber at 40°C for 3 months. After the storage, there were evaluated the change in the water-solubility of the PVA film, the degree of discoloration of the PVA film, and the smell from single-wrapped packages after the aluminium-laminated film had been removed from the double-wrapped packages. The methods of each test are shown below. The evaluation results are shown in Table 1.

### Method of Measuring Water-solubility of PVA Film:

The PVA film was cut into squares (40 mm x 40 mm). Each piece was framed, and dipped in water being stirred at 20°C or 10°C, thereby the time (seconds) was measured until the PVA film completely dissolved. In the case where the PVA film did not dissolve within 30 minutes, it was determined to be water-insoluble.

### Discoloration of PVA Film:

The evaluated results were described as the following symbols:
- ○ :: Not discolored, which means colorless.
- Δ:: Slightly yellowed.
- ×:: Browned.

### Smell from Single-Wrapped Package:

There were sensually evaluated the smell from single-wrapped packages after the aluminium-laminated film had been removed from the double-wrapped packages. The evaluated results were described as the following symbols:
- ○ :: No smell.
- Δ:: A little smell.
- ×:: Very strong smell.

### Example 2:

In the same manner as in Example 1, vinyl acetate and sodium acrylamido-2-methylpropanesulfonate were copolymerized and hydrolyzed to obtain a modified PVA having a sulfonic acid group. The modified PVA had a degree of polymerization of 1250, a degree of hydrolysis of 97 mol%, and a sulfonic acid group content of 4 mol%.

There was formed a modified PVA film having a thickness of 40 µm in the same manner as in Example 1, except that 1 part of propyl gallate, 0.5 parts of citric acid, and 10 parts of glycerin and 15 parts of diglycerin as plasticizers were added to 100 parts of the modified PVA.

In the same manner as in Example 1, except that 35 g of tablets of a microbicidal detergent for toilets (sodium dichloroisocyanurate containing a surfactant) was packaged with the modified PVA film prepared herein, double-wrapped packages were prepared and evaluated. The evaluated results are shown in Table 1.

### Example 3:

In the same manner as in Example 1, vinyl acetate and sodium acrylamido-2-methylpropanesulfonate were copolymerized and hydrolyzed to obtain a modified PVA having a sulfonic acid group. The modified PVA had a degree of polymerization of 1250, a degree of hydrolysis of 98 mol%, and a sulfonic acid group content of 4 mol%.

There was formed a modified PVA film having a thickness of 40 µm in the same manner as in Example 1, except that 0.8 parts of ethyl gallate, 0.3 parts of L-ascorbic acid, and 15 parts of glycerin and 10 parts of polyethylene glycol #300 as plasticizers were added to 100 parts of the modified PVA.

In the same manner as in Example 1, except that a microbicide containing bromo,chloro-5,5-dimethylhydantoin was packaged with the modified PVA film prepared herein, double-wrapped packages were prepared and evaluated. The evaluated results are shown in Table 1.

### Example 4:

There was formed a modified PVA film having a thickness of 40 µm in the same manner as in Example 3, except that L-ascorbic acid was not added.

In the same manner as in Example 3, except that a microbicide containing bromo,chloro-5,5-dimethylhydantoin was packaged with the modified PVA film prepared herein, double-wrapped packages were prepared and evaluated. The evaluated results are shown in Table 1.

### Example 5:

To an aqueous solution of PVA having a degree of polymerization of 1700 and a degree of hydrolysis of 99.6 mol% (this solution was adjusted to acid with hydrochloric acid), there was added 5 mol% (based on the amount of vinyl alcohol units in the PVA) of sulfonic acid benzaldehyde, whereby sulfonic acid benzaldehyde was added to the PVA through acetalization reaction. Thus was obtained a modified PVA having a sulfonic acid group.

There was formed a modified PVA film having a thickness of 40 µm in the same manner as in Example 1, except that 2.5 parts of gallic acid, 1 part of tartaric acid, and 10 parts of glycerin and 15 parts of diglycerin as plasticizers were added to 100 parts of the modified PVA.

In the same manner as in Example 1, except that a microbicide for swimming pools was packaged with the modified PVA film prepared herein, double-wrapped packages were prepared and evaluated. The evaluated results are shown in Table 1.

### Comparative Example 1:

A modified PVA film having a thickness of 40 µm was prepared in the same manner as in Example 1, except that propyl gallate and citric: acid were not added.

In the same manner as in Example 1, except that a microbicide for swimming pools was packaged with the modified PVA film prepared herein, double-wrapped packages were prepared and evaluated. The evaluated results are shown in Table 1.

### Comparative Example 2:

A modified PVA film having a thickness of 40 µm was prepared in the same manner as in Example 2, except that propyl gallate was not added.

In the same manner as in Example 2, except that a microbicidal detergent for toilets was packaged with the modified PVA film prepared herein, double-wrapped packages were prepared and evaluated. The evaluated results are shown in Table 1.

### Comparative Example 3:

A non-modified PVA film having a thickness of 40 µm was prepared in the same manner as in Example 1, except that a non-modified PVA having a degree of polymerization of 1700 and a degree of hydrolysis of 88 mol% was used in stead of the modified PVA having a sulfonic acid group.

In the same manner as in Example 1, except that a microbicide for swimming pools was packaged with the non-modified PVA film prepared herein, double-wrapped packages were prepared and evaluated. The evaluated results are shown in Table 1.

### Comparative Example 4:

A modified PVA film having a thickness of 40 µm was prepared in the same manner as in Example 1, except that 7 parts of bisphenol A was added in stead of propyl gallate.

In the same manner as in Example 1, except that a microbicide for swimming pools was packaged with the modified PVA film prepared herein, double-wrapped packages were prepared and evaluated. The evaluated results are shown in Table 1.

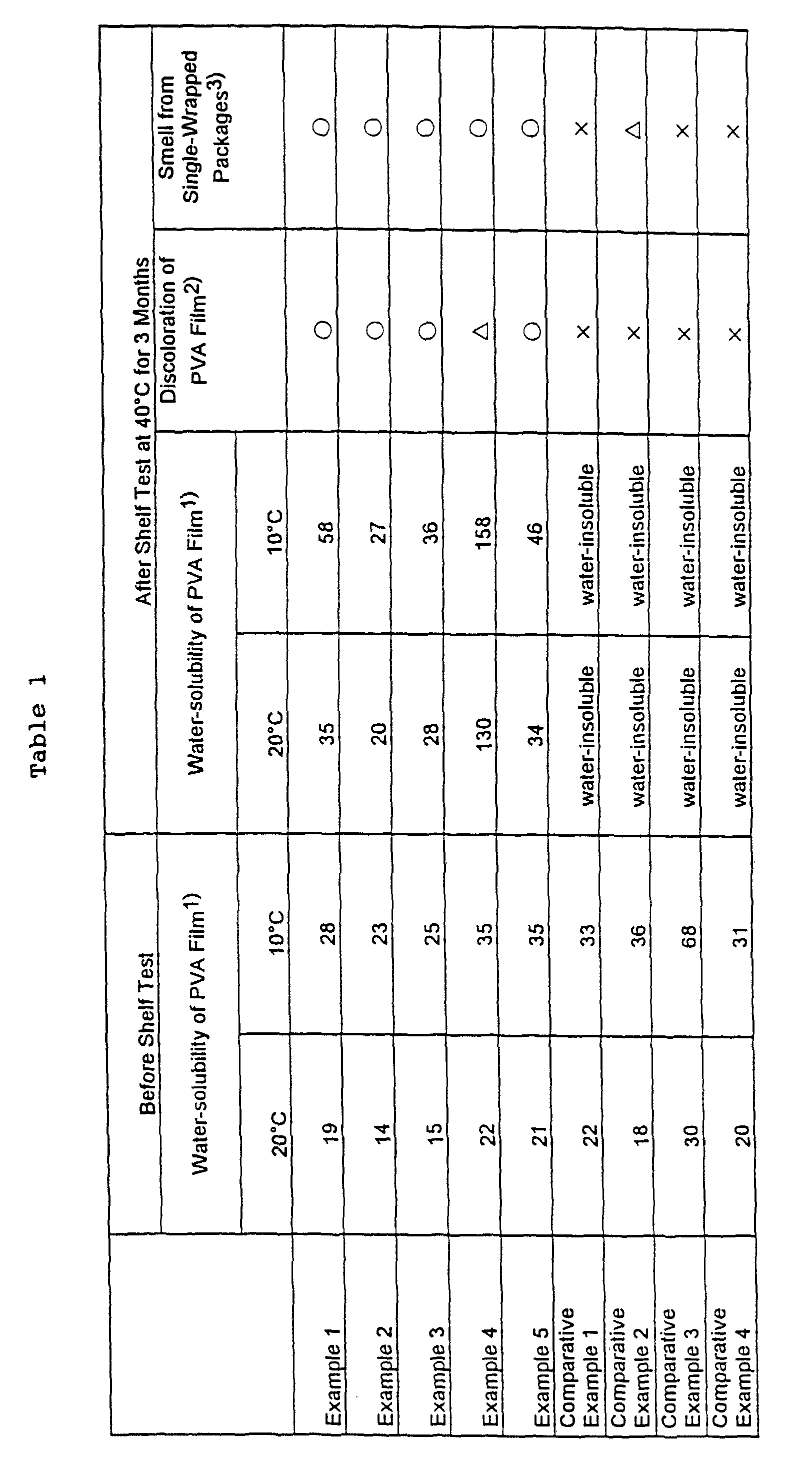

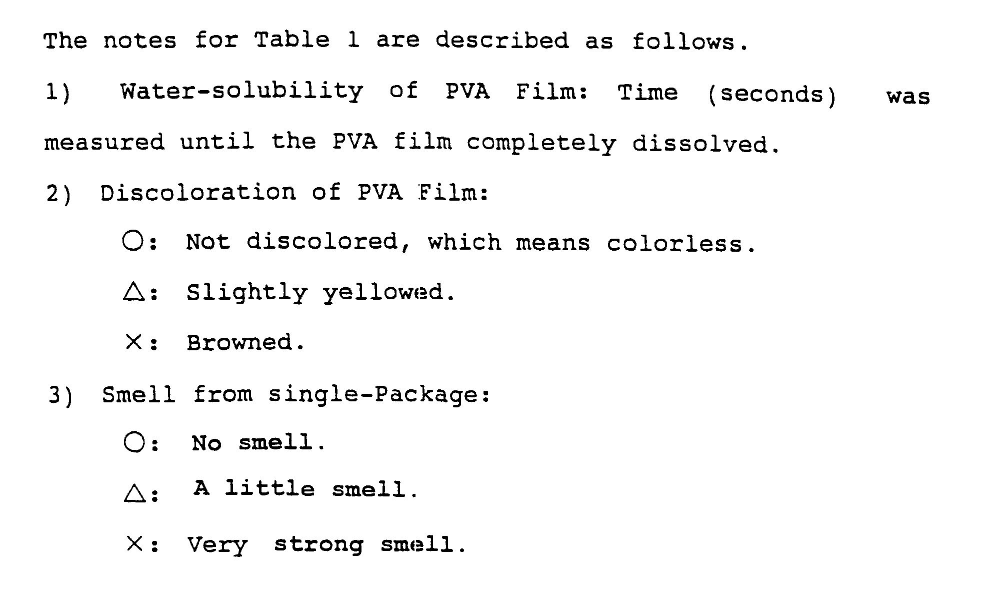

## Claims

1. A water-soluble film comprising 100 parts by weight of (A) a modified polyvinyl alcohol having a sulfonic acid group and 0.05 to 20 parts by weight of (B) gallic acid or a C₁₋₅ alkyl ester thereof.

2. A water-soluble film according to claim 1 comprising 0.01 to 10 parts by weight of (C) a reducing hydroxycarboxylic acid per 100 parts by weight of (A).

3. A package of acid chemical substances, chlorine-containing chemical substances or agricultural chemicals being packaged with a water-soluble film described in claim 1 or 2.

4. A composition comprising 100 parts by weight of (A) a modified polyvinyl alcohol having a sulfonic acid group and 0.05 to 20 parts by weight of (B) gallic acid or a C₁₋₅ alkyl ester thereof.

5. A composition according to claim 4 comprising 0.01 to 10 parts by weight of (C) a reducing hydroxycarboxylic acid per 100 parts by weight of (A).

## Patentansprüche

1. Wasserlösliche Folie, umfassend 100 Gewichtsteile (A) eines modifizierten Polyvinylalkohols mit einer Sulfonsäuregruppe und 0,05 bis 20 Gewichtsteile (B) Gallussäure oder eines C₁₋₅-Alkylesters davon.

2. Wasserlösliche Folie nach Anspruch 1, umfassend 0,01 bis 10 Gewichtsteile (C) einer reduzierenden Hydroxycarbonsäure pro 100 Gewichtsteile (A).

3. Packung saurer Chemikalien, Chlor enthaltender Chemikalien oder Agrochemikalien, verpackt in einer wasserlöslichen Folie nach Anspruch 1 oder 2.

4. Zusammensetzung, umfassend 100 Gewichtsteile (A) eines modifizierten Polyvinylalkohols mit einer Sulfonsäuregruppe und 0,05 bis 20 Gewichtsteile (B) Gallussäure oder eines C₁₋₅-Alkylesters davon.

5. Zusammensetzung nach Anspruch 4, umfassend 0,01 bis 10 Gewichtsteile (C) einer reduzierenden Hydroxycarbonsäure pro 100 Gewichtsteile (A).

## Revendications

1. Film soluble dans l'eau comprenant 100 parties en poids de (A) un alcool de polyvinyle modifié ayant un groupe acide sulfonique et 0,05 à 20 parties en poids de (B) un acide gallique ou son ester alkyle en C1-5.

2. Film soluble dans l'eau selon la revendication 1 comprenant 0,01 à 10 parties en poids de (c) un acide hydroxycarboxylique réducteur pour 100 parties en poids de (A) .

3. Conditionnement de substances chimiques acides, de produits agricoles ou de substances chimiques contenant du chlore au moyen d'un film soluble dans l'eau décrit dans la revendication 1 ou 2.

4. Composition comprenant 100 parties en poids de (A) un alcool de polyvinyle modifié ayant un groupe acide sulfonique et 0,05 à 20 parties en poids de (B) un acide gallique ou son ester alkyle en C1-5.

5. Composition selon la revendication 4, comprenant 0,01 à 10 parties en poids de (C) un acide hydroxycarboxylique réducteur pour 100 parties en poids de (A).
